# EUROPÄISCHE PATENTANMELDUNG

(11) **EP 2 093 401 A2**
(43) Veröffentlichungstag der Anmeldung: **26.08.2009**
(21) Anmeldenummer: 09002144.5
(22) Anmeldetag: 16.02.2009
(51) Int. Cl.: F02C 7/28

(54) **Dichtungsanordnung für eine Gasturbine**

(30) Priorität: 19.02.2008 DE 102008009824
(71) Anmelder: Rolls-Royce Deutschland Ltd & Co KG, 15827 Blankenfelde-Mahlow (DE)
(72) Erfinder: Pisseloup, Arnaud, 10405 Berlin (DE)
(74) Vertreter: Weber, Joachim

(57) **Zusammenfassung**

Die Erfindung bezieht sich auf eine Dichtungsanordnung mit einem radial innenliegenden, ersten Teil (1) und einem radial außenliegenden, zweiten Teil (2a,2b), welche relativ zueinander um eine gemeinsame Drehachse (3) drehbar sind, wobei das erste Teil (1) und das zweite Teil (2a,2b) radial zueinander unter Bildung eines Spalts (4) beabstandet sind und wobei eines der Teile (1,2) eine Radialnut (5) aufweist, in welcher ein den Spalt (4) abdichtender Dichtring (6) angeordnet ist, worin der Dichtring (6) mit zumindest einer Druckausgleichsbohrung (7) versehen ist.

## Beschreibung

Die Erfindung bezieht sich auf eine Dichtungsanordnung gemäß dem Oberbegriff der unabhängigen Ansprüche.

Im Einzelnen bezieht sich die Erfindung auf eine Dichtungsanordnung, welche insbesondere zur Abdichtung einer Lagerkammer einer Gasturbine dient.

Bei Gasturbinen ist es bekannt, in der Lagerkammer einen Dichtungsring vorzusehen, der einen Bereich der Lagerkammer, in welchem sich Luft und Öl befinden, gegen einen außenliegenden Bereich, welcher mit Luft höheren Drucks beaufschlagt ist, abzudichten.

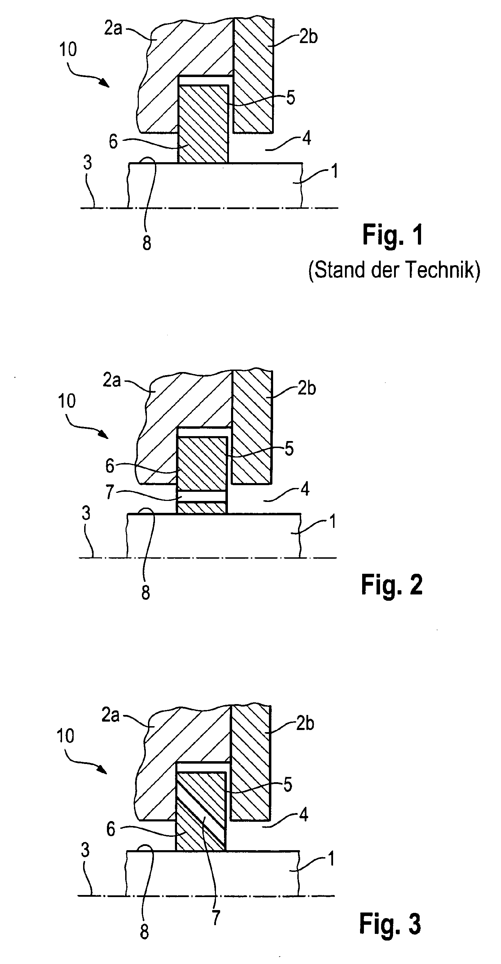

Dabei ist es aus dem Stand der Technik (siehe Fig. 1) bekannt, einen Dichtring 6 zu verwenden, der geteilt oder einstückig sein kann und auf einem radial innenliegenden, ersten Teil 1 (Welle), welche sich um eine Drehachse 3 dreht, gelagert ist. Der Dichtring 6 ist im Axialring geringfügig bewegbar und wird in einer Radialnut 5 gehalten, welche in einem zweiten, radial außenliegenden Teil 2a, 2b gebildet wird.

Üblicherweise sind derartige Dichtungen für Lagerkammern mit einem Dichtring versehen, zusätzlich kann eine Labyrinthdichtung vorgesehen sein.

Zwischen dem zweiten Teil 2a, 2b und dem ersten Teil 1 ist ein geringfügiger, ringförmiger Spalt 4 ausgebildet.

Hinsichtlich der oben genannten Labyrinthdichtung kann es bei bestimmten Konstruktionsbedingungen schwierig sein, zusätzlich eine Labyrinthdichtung in Kombination mit dem Dichtring vorzusehen. Somit erweist sich eine Ausgestaltung mit jeweils einem Dichtring auf jeder Seite der Lagerkammer als bevorzugt. Wenn jedoch der Luftdruck (rechte Seite gemäß Fig. 1) höher ist, als der Innendruck der Lagerkammer (linke Seite gemäß Fig. 1) kann es vorkommen, dass der Dichtring 6 an dem inneren Flansch des Dichtungsträgers (zweites Teil 2a, 2b) anliegt und dort fest sitzt. Der Grund hierfür ist der hohe Druckunterschied (Druckdifferential) zwischen der rechten und der linken Seite der Dichtungsanordnung gemäß Fig. 1. Wenn der Dichtring 6 an der Wandung der Radialnut 5 fest anliegt, ist die freie Drehbarkeit des Dichtrings 6 gestoppt oder wird im Wesentlichen verhindert. Dies führt zu einem erheblichen Verschleiß am inneren Radiusbereich des Dichtrings 6, an welchem dieser auf der Welle (erstes Teil 1) aufliegt. Hierdurch verschleißt der Dichtring 6. Zusätzlich wird die Dichtwirkung erheblich herabgesetzt.

Der Erfindung liegt die Aufgabe zugrunde, eine Dichtungsanordnung der genannten Art zu schaffen, welche bei einfachem Aufbau und einfacher, kostengünstiger Herstellbarkeit die Nachteile des Standes der Technik vermeidet und eine gute Dichtwirkung aufweist.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Erfindungsgemäß ist somit vorgesehen, dass entweder der Dichtring oder das radial außenliegende Teil mit zumindest einer Druckausgleichsbohrung versehen sind. Hierdurch wird die Druckdifferenz über den Dichtring herabgesetzt, so dass die Gesamtkraft, welche auf den Dichtring wirkt, nicht ausreichend ist, um einen ständigen Kontakt mit dem Flansch (Fläche der Radialnut) zu bewirken. Hierdurch wird sichergestellt, dass der Dichtring nicht an dem außenliegenden Teil festsitzt und/oder gegen dieses unter hoher Reibung anliegt. Der Verschleiß des Dichtrings wird somit erheblich reduziert.

Erfindungsgemäß ist es möglich, die Druckausgleichsbohrung in Axialrichtung vorzusehen. Es ist jedoch auch möglich, die Druckausgleichsbohrung zur Drehachse zu neigen, um Luft direkt an die Seitenwandung des Dichtrings zu leiten, welches sich in Kontakt mit der Radialnut befindet. Hierdurch wird ein Luftlager gebildet, auf welchem der Dichtring gleitet. Hierdurch werden statische Ölverluste vermieden, da bei stillstehender Lageranordnung kein Ölfluss auftreten kann.

Erfindungsgemäß hat es sich als besonders günstig erwiesen, wenn mehrere Druckausgleichsbohrungen am Umfang gleichmäßig verteilt sind. Eine bevorzugte Mindestzahl liegt dabei bei vier Druckausgleichsbohrungen, welche bevorzugterweise um jeweils 90° versetzt sind. Hierdurch wird eine freie Bewegbarkeit des Dichtrings sichergestellt.

Die Druckausgleichsbohrungen werden bevorzugterweise so dimensioniert, dass ein Minimum und ein Maximum von Luftströmung durch diese hindurchtreten kann. Durch diese Dimensionierung der Druckausgleichsbohrungen ist es möglich, den Luftfluss, welcher in die Lagerkammer eintritt, exakt zu bestimmen und infolgedessen auch eine Ölrückführpumpe und/oder eine Entlüftungsleitung in optimaler Weise zu dimensionieren. Hierdurch ergeben sich weitere Kostenvorteile der gesamten Lageranordnung.

Erfindungsgemäß ist somit ein Prinzip verwirklicht, bei welchem Dichtungsluft durch die Druckausgleichsbohrungen strömt. Diese Dichtungsluft führt zu einem Luftdruck in der Radialnut oder Ringnut, welcher dem Druck in der Lagerkammer angenähert ist, so dass sich insgesamt in dem Dichtring ein geringerer Differenzdruck bildet. Dies führt, wie erwähnt, zu dem Effekt, dass der Dichtring nicht an der Wandung der Radialnut oder Ringnut anliegt und anhaftet, so wie dies der Fall wäre, wenn eine große Druckdifferenz vorliegen würde.

Hierdurch wird der Verschleiß des Dichtrings erheblich herabgesetzt.

Im Folgenden wird die Erfindung anhand von Ausführungsbeispielen in Verbindung mit der Zeichnung beschrieben. Dabei zeigt:
- Fig. 1: eine Dichtungsanordnung gemäß dem Stand der Technik,
- Fig. 2: eine Dichtungsanordnung, analog Fig. 1 eines ersten Ausführungsbeispiels der Erfindung,
- Fig. 3: eine Dichtungsanordnung eines weiteren Ausführungsbeispiels der Erfindung, und
- Fig. 4: eine schematische Darstellung der erfindungsgemäßen Dichtungsanordnung mit Zuordnung zu einer Lagerkammer.

Die Figuren zeigen jeweils ein radial innenliegendes, erstes Teil 1, welches in Form einer Welle ausgebildet ist, die um eine Drehachse 3 drehbar ist. Auf einer Oberfläche 8 des ersten Teils 1 sitzt ein Dichtring 6, welcher in einer Radialnut 5 (Ringnut) eines radial außenliegenden, zweiten Teils 2a, 2b gelagert und gehaltert ist. Die Radialnut 5 ist in Radialrichtung größer dimensioniert, als der Dichtring 6, so dass sich dieser geringfügig in Axialrichtung bewegen kann. Damit ist sichergestellt, dass der Dichtring 6 in der Radialnut 5 gleitet, während er auf dem ersten Teil 1 drehfest aufsitzt.

In den Figuren ist auf der rechten Seite der Bereich der Lagerluft dargestellt, welcher einen höheren Druck aufweist, als der linke Bereich der Figuren, welcher der Lagerkammer (Öl/Luft) zugeordnet ist.

Bei dem in Fig. 2 gezeigten Ausführungsbeispiel ist zumindest eine radiale Druckausgleichsbohrung 7 in dem Dichtring vorgesehen. Dies führt zu einer Verminderung der Druckdifferenz über den Dichtring und senkt die Gefahr, dass dieser gegen die Wand der Radialnut 5 anliegt und sich mit dem radial außenliegenden zweiten Teil 2a, 2b dreht und hierbei ein Verschleiß an der Oberfläche 8 des ersten Teils 1 ausgesetzt ist.

Die Fig. 3 zeigt ein weiteres Ausführungsbeispiel, bei welchem die Druckausgleichsbohrung 7 in Axialrichtung geneigt ist. Die Lagerluft wird somit der Flanke des Dichtrings 6 zugeführt und bildet mit der Wandung der Radialnut 5 ein Luftlager, so dass der Dichtring 6 ohne Verschleiß in der Radialnut 5 geführt und gehaltert ist.

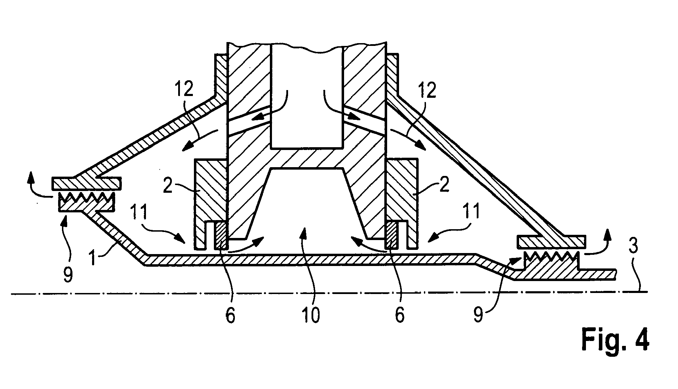

Die Fig. 4 zeigt die Zuordnung der erfindungsgemäßen Dichtungsanordnung zu einer Lagerkammer 10. Auf die Darstellung des Lagers selbst wurde verzichtet. Die Fig. 4 zeigt insbesondere die Zuführung von Lagerluft 12 aus einer zentralen Versorgung zu den beiden seitlichen Bereichen der erfindungsgemäßen Dichtungsanordnung zur Beaufschlagung des Dichtrings 6. In Fig. 4 ist die Dichtungsanordnung mit dem Bezugszeichen 11 bezeichnet. Weiterhin zeigt die Fig. 4, dass die Lagerluft 12 seitlich auch durch Labyrinthdichtungen 9 entweicht, so wie dies aus dem Stand der Technik bekannt ist.

### Bezugszeichenliste

- 1: Radial innenliegendes erstes Teil
- 2: Radial außenliegendes zweites Teil
- 3: Drehachse
- 4: Spalt
- 5: Radialnut
- 6: Dichtring
- 7: Druckausgleichsbohrung
- 8: Oberfläche
- 9: Labyrinthdichtung
- 10: Lagerkammer
- 11: Dichtungsanordnung (Ringdichtung)
- 12: Lagerluft

## Patentansprüche

1. Dichtungsanordnung mit einem radial innenliegenden, ersten Teil (1) und einem radial außenliegenden, zweiten Teil (2a, 2b), welche relativ zueinander um eine gemeinsame Drehachse (3) drehbar sind, wobei das erste Teil (1) und das zweite Teil (2a, 2b) radial zueinander unter Bildung eines Spalts (4) beabstandet sind und wobei eines der Teile (1, 2) eine Radialnut (5) aufweist, in welcher ein den Spalt (4) abdichtender Dichtring (6) angeordnet ist, **dadurch gekennzeichnet, dass** der Dichtring (6) mit zumindest einer Druckausgleichsbohrung (7) versehen ist.

2. Dichtungsanordnung mit einem radial innenliegenden, ersten Teil (1) und einem radial außenliegenden, zweiten Teil (2a, 2b), welche relativ zueinander um eine gemeinsame Drehachse (3) drehbar sind, wobei das erste Teil (1) und das zweite Teil (2a, 2b) radial zueinander unter Bildung eines Spalts (4) beabstandet sind und wobei eines der Teile (1, 2) eine Radialnut (5) aufweist, in welcher ein den Spalt (4) abdichtender Dichtring (6) angeordnet ist, **dadurch gekennzeichnet, dass** das zweite Teil (2a, 2b) mit zumindest einer Druckausgleichsbohrung versehen ist.

3. Dichtungsanordnung nach Anspruch 1 oder 2, **dadurch gekennzeichnet, dass** die Druckausgleichsbohrung (7) im Wesentlichen in Axialrichtung angeordnet ist.

4. Dichtungsanordnung nach Anspruch 1 oder 2, **dadurch gekennzeichnet, dass** die Druckausgleichsbohrung (7) zur Axialrichtung geneigt angeordnet ist.

5. Dichtungsanordnung nach einem der Ansprüche 1 bis 4, **dadurch gekennzeichnet, dass** mehrere Druckausgleichsbohrungen (7) am Umfang angeordnet sind.

6. Dichtungsanordnung nach Anspruch 5, **dadurch gekennzeichnet, dass** mindestens vier Druckausgleichsbohrungen (7) am Umfang angeordnet sind.

7. Dichtungsanordnung nach einem der Ansprüche 1 bis 6, **dadurch gekennzeichnet, dass** die Druckausgleichsbohrung (7) zur Lagerluftdurchleitung dimensioniert ist.

8. Verwendung einer Dichtungsanordnung nach einem der Ansprüche 1 bis 7 in einer Lagerkammer einer Gasturbine.
